# EUROPÄISCHE PATENTANMELDUNG

(11) **EP 2 824 374 A2**
(43) Veröffentlichungstag der Anmeldung: **14.01.2015**
(21) Anmeldenummer: 14176088.4
(22) Anmeldetag: 08.07.2014
(51) Int. Cl.: F16L 11/10, F16L 11/115

(54) **Radial bewehrter Kunststoffschlauch und Verfahren zur Herstellung eines radial bewehrten Kunststoffschlauchs**

(30) Priorität: 12.07.2013 DE 102013011729
(71) Anmelder: EX-O-FLEX Gesellschaft für Kunststofformung GmbH, 77971 Kippenheim (DE)
(72) Erfinder: Alber Freiherr von Glanstätten, Tassilo, 79108 Freiburg (DE); Alber Freiherr von Glanstätten, Helmar, 77971 Kippenheim (DE)
(74) Vertreter: Held, Stephan

(57) **Zusammenfassung**

Die Erfindung betrifft einen radial bewehrten Kunststoffschlauch 1, umfassend einen Innenschlauch 2, eine erste radiale Bewehrung 3 und eine zweite radiale Bewehrung 4, wobei die erste radiale Bewehrung 3 mit dem Innenschlauch 2 fest verbunden ist und einen Windungsfreiraum 5 bildet, wobei die zweite radiale Bewehrung 4 in dem Windungsfreiraum 5 beweglich gelagert angeordnet ist und eine Schlauchoberfläche bildet.

## Beschreibung

Die Erfindung betrifft einen radial bewehrten Kunststoffschlauch, umfassend einen Innenschlauch, eine erste radiale Bewehrung und eine zweite radiale Bewehrung, gemäß Patentanspruch 1. Außerdem betrifft die Erfindung ein Verfahren zur Herstellung eines radial bewehrten Kunststoffschlauchs, gemäß Patentanspruch 9.

Küchen- und Bad-Armaturen, bei denen der Schlauch aus Bohrungen oder Krümmern herausgezogen und wieder versenkt werden kann, erfreuen sich aufgrund ihrer praktischen und vielseitigen Anwendungsmöglichkeiten steigender Beliebtheit. Versenkbare Metallschläuche haben jedoch den Nachteil, dass sie schwer sind, einen großen Biegeradius haben und beim Herausziehen und Versenken erhebliche Geräusche entwickeln. Andererseits sind herkömmliche Kunststoffschläuche für diesen Anwendungszweck nicht geeignet, da ihre Oberfläche nicht die erforderliche Gleitfähigkeit aufweist.

Aus dem Stand der Technik sind daher umflochtene bzw. ummantelte, bewehrte Schläuche bekannt, mit deren Hilfe versucht wird, eine Kompromisslösung zwischen Metall- und Kunststoffschläuche zu finden. Aus der EP 0 465 837 B1 ist beispielsweise ein umflochtener Schlauch bekannt. Aufgrund des Geflechts aus harten Kunststoffprofilen wird eine hohe Gleitfähigkeit bezüglich des radial bewehrten Kunststoffschlauches erzielt. Bei vielen Endkunden löst die offene Flechtstruktur, in der sich Schmutzpartikel ansammeln können, das subjektive Gefühl aus, dass diese Schläuche unhygienisch sind.

In der DE 30 17 326 C2 wird ein ummantelter, bewehrter Schlauch offenbart, welcher eine glatte Außenfläche sowie eine gute Flexibilität und kleine Biegeradien aufweist. Aufgrund der Ummantelung des Schlauches mit Weichkunststoffmaterial erfolgt eine hohe Reibung an der Ummantelung des Schlauches, sofern der Schlauch aus Bohrungen oder Krümmern herausgezogen und wieder versenkt wird.

Ausgehend von diesem Stand der Technik ist es zunächst Aufgabe der Erfindung, einen radial bewehrten Kunststoffschlauch zur Verfügung zu stellen, welcher über einen geringen Reibungskoeffizienten, eine hohe radiale Steifigkeit bei gleichzeitig hoher Flexibilität und eine weitgehend ebene Oberfläche verfügt. Dieser Schlauch kann seinen Einsatz überall dort finden, wo ein gleitfähiger, flexibler, knickfester und leicht zu reinigender Schlauch benötigt wird, wie z. B. als wasserführender Schlauch für versenkbare und ausziehbare Handbrausen.

Bezüglich der Herstellung wendelverstärkter Schläuche sind zwei Fertigungsverfahren bekannt. Zum einen handelt es sich um ein diskontinuierliches, rotierendes Verfahren und zum anderen um ein Endlosverfahren mit ruhendem Schlauch.

Beim diskontinuierlichen, rotierenden Verfahren wird der Innenschlauch samt Bewehrung als Strangprofil hergestellt und auf eine Vorrichtung aufgewickelt, wodurch der fertige Schlauch um seine Längsachse rotiert. In der DE 27 11 236 C2 wird beispielsweise ein derartiges Verfahren beschrieben. Kennzeichen dieser Schläuche ist eine parallel zur Wendel verlaufende Füge-Naht, die durch ein Verschweißen oder Verkleben der beieinanderliegenden aufgewickelten Bänder erzielt wird.

Beim Endlosverfahren mit ruhendem Schlauch wird in einem ersten Schritt ein Innenschlauch als Glattschlauch hergestellt, wobei dieser anschließend mit mindestens einem Bewehrungsprofil bewickelt wird. In diesem Zusammenhang wird beispielhaft auf die DE 27 00 056 C2 verwiesen. Neben den Vorteilen einer kontinuierlichen Fertigung können in diesem Verfahren Längsarmierungen in den Schlauch eingebettet werden, wodurch eine höhere Zug- und Biegebelastbarkeit erzielt wird. Dies erfolgt bei gleichzeitig geringeren Wandstärken und höherer Flexibilität.

Aufgrund der nachfolgenden Umwicklung liegt die Bewehrung lediglich lose auf der Innenseele auf und muss nachfolgend mit dieser verbunden werden. Diesbezüglich sind aus dem Stand der Technik zwei Verfahren bekannt. Zum einen kann das lose aufliegende Profil mit einer Ummantelung fixiert werden. Zum anderen kann das Profil mit der Innenseele verklebt werden, wie dies beispielsweise in DE 30 17 326 C2 beschrieben wird. Bei erstgenannter Variante wird der Schlauch im Biegebereich verdickt und somit steifer. Aufgrund der Verdickung des Schlauches wird jedoch keine Verbesserung der mechanischen Eigenschaften wie z.B. Zug-, Druck-, Vakuum- und Biegewechsel-Festigkeit erreicht. Die Zug-, Druck- und Vakuum-Festigkeit wird hauptsächlich durch die Wandstärke der Innenseele vorgegeben.

Die Nachteile der Fixierung durch Ummantelung treten bei der Verklebung des Profils mit der Innenseele nicht auf, allerdings erfordert dieses Verfahren leicht zu verklebende Materialien, wodurch die Materialwahl stark eingeschränkt wird. Überwiegend wird hier auf PVC und Polyurethane zurückgegriffen. Außerdem sei darauf hingewiesen, dass Haftvermittler bzw. Klebstoffe oftmals chemisch nicht derart resistent sind wie die zu verklebenden Materialien und schneller verschleißen bzw. altern.

Die Einschränkung bezüglich der Materialwahl ist insbesondere bei Trinkwasserschläuchen und Schläuchen mit Lebensmittelkontakt von Nachteil. Zukunftsweisende Materialien wie z.B. Oleofine und deren Copolymere und Compounds sind nur sehr schlecht verklebbar. Die bekannten Klebstoffsysteme erzielen keinen ausreichenden Widerstand gegen Schälbeanspruchung.

Somit ist es eine weitere Aufgabe der Erfindung, ein verbessertes Verfahren zur Herstellung eines radial bewehrten Kunststoffschlauches zur Verfügung zu stellen, welches einen endlosgefertigten, bewehrten Schlauch ohne Einsatz von Klebstoff, ohne dessen Biegeverhalten zu beeinträchtigen, ermöglicht.

Erfindungsgemäß werden die erläuterten Aufgaben im Hinblick auf den radial bewehrten Kunststoffschlauch durch den Gegenstand des Patentanspruches 1 und im Hinblick auf das Verfahren zur Herstellung eines radial bewehrten Kunststoffschlauches durch den Gegenstand des Patentanspruches 9 gelöst.

So beruht die Erfindung auf dem Gedanken, einen radial bewehrten Kunststoffschlauch, welcher einen Innenschlauch, eine erste radiale Bewehrung und eine zweite radiale Bewehrung umfasst, zur Verfügung zu stellen, wobei die erste Bewehrung fest mit dem Innenschlauch verbunden ist und einen Windungsfreiraum bildet, wobei die zweite radiale Bewehrung in dem Windungsfreiraum beweglich gelagert angeordnet ist und eine Schlauchoberfläche bildet. Vorzugsweise bildet die zweite radiale Bewehung eine bzw. die äußerste Schlauchoberfläche. Mit anderen Worten kann das Außenprofil des Kunststoffschlauches durch die zweite radiale Bewehrung gebildet werden.

Demnach wird in anderen Worten ein wendelbewehrter Schlauch mit mehrfacher radialer Bewehrung zur Verfügung gestellt, wobei mindestens ein Element, d.h. mindestens eine erste radiale Bewehrung, fest mit der Innenseele bzw. dem Innenschlauch verbunden ist und mindestens ein Element, d.h. eine zweite radiale Bewehrung, lose aufliegt. Demnach wird die zweite radiale Bewehrung, welche das Außenprofil des wendelbewehrten Schlauches darstellt, lose in den Windungshohlraum bzw. Windungsfreiraum des Innenprofils bzw. der ersten radialen Bewehrung eingelegt, wobei der lose Teil bzw. die zweite radiale Bewehrung relativ zum fest verbundenen Teil beweglich ist, wodurch der Schlauch trotz ebener und vollwandiger Oberfläche sehr flexibel ist. In anderen Worten ist die zweite radiale Bewehrung im Windungsfreiraum beweglich gelagert und füllt den Windungsfreiraum zumindest teilweise aus, sodass ohne eine zusätzliche Ummantelung eine weitgehend ebene, vorzugsweise äußere, Schlauchoberfläche gebildet wird. Die erste radiale Bewehrung kann mit der Innenseele bzw. dem Innenschlauch beispielsweise stoffschlüssig verbunden sein. Bei einer stoffschlüssigen Verbindung handelt es sich um eine äußerst feste Verbindung.

Vorzugsweise ist die zweite radiale Bewehrung bzw. das Außenprofil als Gleitelement ausgebildet. Insbesondere ist die zweite radiale Bewehrung aus einem gleitfähigen und/oder abriebfesten Material hergestellt. Es ist auch denkbar, dass die zweite radiale Bewehrung auf der Außenfläche bzw. auf der von der Innenseele bzw. dem Innenschlauch wegweisenden Seite eine gleitfähige und/oder abriebfeste Beschichtung aufweist. Die erste radiale Bewehrung und/oder die zweite radiale Bewehrung können bzw. kann eine Wendelbewehrung sein. Mit anderen Worten können die erste radiale Bewehrung und/oder die zweite radiale Bewehrung spiralförmig ausgebildet sein bzw. in Relation zum Innenschlauch spiralförmig um den Innenschlauch herum verlaufen.

Vorzugsweise ist die zweite radiale Bewehrung und/oder die Oberfläche der zweiten radialen Bewehrung aus Polyamid und/oder Polyethylen, insbesondere Polyethylen hoher Dichte, und/oder Polyester und/oder Polypropylen und/oder Polyurethan und/oder Hart-PVC, hergestellt. Demnach dient die zweite radiale Bewehrung bei Schläuchen für Aufroll-Mechanismen und bei Trinkwasserschläuchen für herausziehbare Handbrausen als Gleitelement und besteht daher vorzugsweise aus den genannten gleitfähigen und/oder abriebfesten Materialien. Vorzugsweise bildet die zweite radiale Bewehrung das Außenprofil bzw. die äußerste Schlauchoberfläche des radial bewehrten Kunststoffschlauches. Demnach sind keine weiteren zusätzlichen Elemente, insbesondere keine zusätzlichen Schutzummantelungen bzw. Schlauchummantelungen notwendig. Mit Hilfe des erfindungsgemäßen Kunststoffschlauches wird folglich ein äußerst gleitfähiger, flexibler, knickfester und leicht zu reinigender Schlauch zur Verfügung gestellt, der aus wenigen Einzelteilen besteht.

Die erste radiale Bewehrung bzw. das Innenprofil ist fest, insbesondere stoffschlüssig, mit dem Innenschlauch verbunden und besteht vorzugsweise ebenfalls aus einem Hartkunststoff, um eine hohe radiale Steifigkeit und Knickfestigkeit zu erzielen. Des Weiteren wird aufgrund der Verwendung eines Hartkunststoffes in Verbindung mit der ersten radialen Bewehrung die Abflachung des Schlauches bei einer Biegung vermieden. Der Innenschlauch kann als Glattschlauch ausgebildet sein.

In einer weiteren Ausführungsform der Erfindung weist der Innenschlauch eine Längsarmierung zur Aufnahme von Zugkräften und/oder ein Kreuzgeflecht zur Aufnahme von Zug- und Druckkräften auf.

Der erfindungsgemäße radial bewehrte Kunststoffschlauch bzw. die Anordnung der ersten radialen Bewehrung und der zweiten radialen Bewehrung ermöglichen ein konstruktiv einfaches Einbringen großflächiger Dekorelemente bzw. Dekorschichten.

Demnach ist es möglich, dass die zweite radiale Bewehrung eine Dekorschicht aufweist. Vorzugsweise ist die Dekorschicht abschnittsweise auf der vom Innenschlauch wegweisenden Fläche der zweiten radialen Bewehrung angeordnet. Auf der Dekorschicht kann abschnittsweise ein gleitfähiges und/oder abriebfestes Material, insbesondere Polyamid, aufgebracht sein. So ist eine Einbettung einer metallisierten Folie oder Heißprägefolie möglich, wie dies insbesondere von Kunststoffbrauseschläuchen bekannt ist. Zur Erzielung einer hohen Abriebfestigkeit kann die Folie bzw. Dekorschicht auf die zweite radiale Bewehrung, insbesondere auf die Außenfläche der zweiten radialen Bewehrung aufgelegt werden, wobei dieser lose Verband von Dekorschicht und zweiter radialer Bewehrung mit einem gleitfähigen, abriebfesten Material, wie z.B. Polyamid, ummantelt werden kann.

Sowohl die erste radiale Bewehrung als auch die zweite radiale Bewehrung können unterschiedliche Profilformen aufweisen. Demnach sind für beide radiale Bewehrungen im Querschnitt dreieckförmige Profile und/oder halbrunde Profile und/oder runde Profile und/oder halbschalenförmige Profile denkbar, wobei die Profile wahlweise kombiniert werden können, d.h. die erste radiale Bewehrung kann eine andere Profilform bzw. eine andere Querschnittsform als die zweite radiale Bewehrung aufweisen.

Gemäß einem weiteren Aspekt beruht die Erfindung auf dem Gedanken, ein Verfahren zur Herstellung eines radial bewehrten Kunststoffschlauches, insbesondere zur Herstellung eines radial bewehrten Kunststoffschlauches, nach einem der Ansprüche 1-8, zur Verfügung zu stellen. Demnach umfasst das Herstellungsverfahren folgende Schritte:
a) Herstellung eines Innenschlauchs,
b) abschnittsweises Aufbringen einer adsorbierenden, insbesondere durch Strahlung aktivierbare, Schicht, auf der Außenfläche des Innenschlauchs und/oder auf einer ersten aufzubringenden radialen Bewehrung,
c) Aktivieren der adsorbierenden Schicht,
d) stoffschlüssige Verbindung der radialen Bewehrung mit dem Innenschlauch.

In anderen Worten basiert das erfindungsgemäße Verfahren darauf, eine Schicht, welche zwischen dem Innenschlauch und der ersten radialen Bewehrung befindlich ist, zu erhitzen bzw. durch Strahlung zu aktivieren, so dass die radiale Bewehrung mit dem Innenschlauch bzw. der Innenseele stoffschlüssig verbunden wird. Vorzugsweise handelt es sich bei der aufzubringenden Schicht um eine adsorbierende, insbesondere durch Strahlung aktivierbare, Schicht. Die Aktivierung kann durch einen Laser und/oder eine Infrarotlampe und/oder eine Mikrowelle bzw. eine Mikrowellenvorrichtung erfolgen. Demnach basiert die Aktivierung beispielsweise auf Laserstrahlen und/oder Infrarotstrahlen und/oder Mikrowellen. Besonders geeignet ist das Lasertransmissionsschweißen.

Die adsorbierende Schicht kann pulverförmig und/oder in Form einer Folie und/oder in Form einer Heißsiegelfolie und/oder in Form eines Extrudats und/oder in Form eines Coextrudats aufgebracht werden. Die adsorbierende Schicht kann auf der Außenfläche des Innenschlauchs und/oder auf einer ersten aufzubringenden radialen Bewehrung aufgebracht werden. Sofern die adsorbierende Schicht auf einer bezüglich des Innenschlauchs aufzubringenden radialen Bewehrung aufgebracht werden soll, erfolgt das Aufbringen der adsorbierenden Schicht auf der Innenfläche der aufzubringenden radialen Bewehrung, d.h. auf der zum Innenschlauch hinweisenden Fläche bzw. Seite der aufzubringenden radialen Bewehrung. Besonders vorteilhaft ist eine Beschichtung der radialen Bewehrung mit einer adsorbierenden Schicht, da in diesem Fall lediglich der Bereich erhitzt wird, der verbunden bzw. verschweißt werden soll, so dass in diesem Zusammenhang die größte Energieausbeute erzielt werden kann.

Für die adsorbierende Schicht können die gleichen Materialien, wie sie für die zu verbindenden Elemente verwendet werden. Allerdings müssen die Materialien im Zusammenhang mit der adsorbierenden Schicht adsorbierend ausgerüstet werden. Die Ausrüstung kann beispielsweise mit Hilfe von Pigmenten erfolgen. Zur Adsorption von Laser- und Infrarotstrahlen können beispielsweise Ruß-Pigmente verwendet werden. Zur Adsorption von Mikrowellenstrahlung können beispielsweise Eisenoxid-Pigmente verwendet werden. Generell können auch andere kompatible Materialien verwendet werden.

Die adsorbierende Schicht kann in Coextrusion oder durch eine nachfolgende Ummantelung bzw. Beschichtung des Innenschlauches bzw. der radialen Bewehrung erfolgen. Ferner könnte diese Schicht auch als Pulverbeschichtung, Lackierung oder durch ein eigenständiges Element in Form einer Heißsiegelfolie oder einer zulaufenden Folie ein- bzw. aufgebracht werden.

Eine Beschichtung bzw. Aufbringung der Schicht auf die radiale Bewehrung hat gegenüber einer Beschichtung bzw. Aufbringen der Schicht auf den Innenschlauch den Vorteil, dass nur der zu erhitzende Bereich adsorbierend ausgeführt ist und somit die höchste Energieausbeute erzielt wird. Die Beschichtung auf der ersten aufzubringenden radialen Bewehrung bzw. das Auftragen einer adsorbierenden Schicht auf einer radialen Bewehrung kann beispielsweise durch ein Coextrusionsverfahren erfolgen. Auch eine Ummantelung der radialen Bewehrung ist möglich. Die Coextrusion ist kostengünstig und prozesssicher und erlaubt die Verarbeitung einer großen Bandbreite an Thermoplasten, so dass aus einer großen Anzahl geeigneter Materialkombinationen ausgewählt werden kann.

Aufgrund der Verbindung bzw. der stoffschlüssigen Verbindung der ersten radialen Bewehrung mit dem Innenschlauch wird ein Windungsfreiraum gebildet, wobei eine zweite radiale Bewehrung in dem Windungsfreiraum relativ zu der ersten radialen Bewehrung beweglich gelagert, angeordnet wird. Demnach wird eine unfixierte bzw. unverbundene bzw. lose radiale Bewehrung in den Windungsfreiraum eingelegt. Die zweite radiale Bewehrung wird demnach in den Windungsfreiraum gewickelt. Vorteilhafterweise wird dieser Verfahrensschritt nach der stoffschlüssigen Verbindung bzw. der Verschweißung der fest verbundenen ersten radialen Bewehrung mit dem Innenschlauch in deren Windungsfreiraum gewickelt.

Die Erfindung wird im Folgenden anhand eines Ausführungsbeispiels unter Bezugnahme auf die beigefügten Zeichnungen näher erläutert. Darin zeigen:
- Fig. 1: eine Seitenansicht mit teilweiser Querschnittsansicht eines erfindungsgemäßen radial bewehrten Kunststoffschlauchs;
- Fig. 2: eine Detailansicht bezüglich eines radial bewehrten Kunststoffschlauches mit Innenschlauch und zwei radialen Bewehrungen;
- Fig. 3: vier verschiedene Ausführungsformen bezüglich einer abschnittsweis aufgebrachten adsorbierenden Schicht und
- Fig. 4: vier verschiedene Ausführungsformen bezüglich der Profilformen der radialen Bewehrungen.

In der nachfolgenden Beschreibung werden für gleiche und gleich wirkende Teile dieselben Bezugsziffern verwendet.

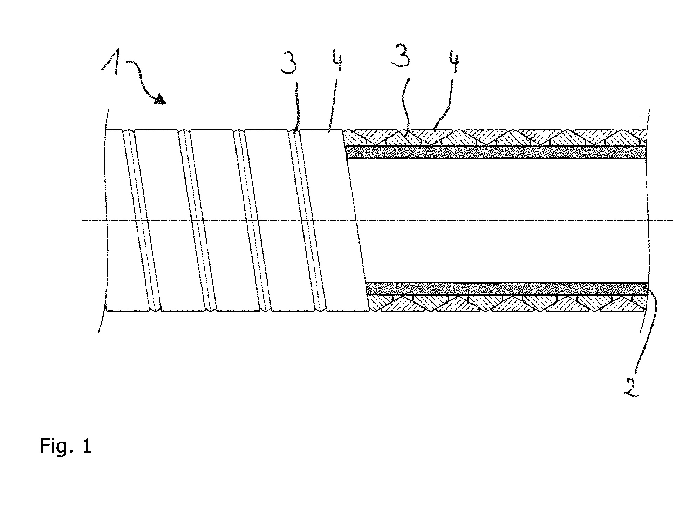

Fig. 1 zeigt eine Seitenansicht auf einen bewehrten Kunststoffschlauch 1. Die rechte Seite der Darstellung zeigt einen Querschnitt durch den radial bewehrten Kunststoffschlauch 1. Demnach umfasst der radial bewehrte Kunststoffschlauch 1 einen Innenschlauch 2, eine erste radiale Bewehrung 3 und eine zweite radiale Bewehrung 4. Die erste radiale Bewehrung 3 ist mit dem Innenschlauch bzw. der Innenseele 2 fest, insbesondere stoffschlüssig, verbunden und bildet einen Windungsfreiraum 5, wobei die zweite radiale Bewehrung 4 in dem Windungsfreiraum 5 beweglich gelagert, insbesondere relativ zu der ersten radialen Bewehrung 3, angeordnet ist. Die zweite radiale Bewehrung 4 dient als Außenprofil und ist lose in den Windungsfreiraum 5 der ersten radialen Bewehrung 3 bzw. des Innenprofils eingelegt und bildet eine Schlauchoberfläche. Dabei handelt es sich um eine weitgehend ebene Schlauchoberfläche, wobei keine zusätzliche Ummantelung notwendig ist. Der lose Teil 4 ist relativ zum fest verbundenen Teil 3 beweglich, wodurch der radial bewehrte Kunststoffschlauch 1 trotz ebener und vollwandiger Oberfläche sehr flexibel ist.

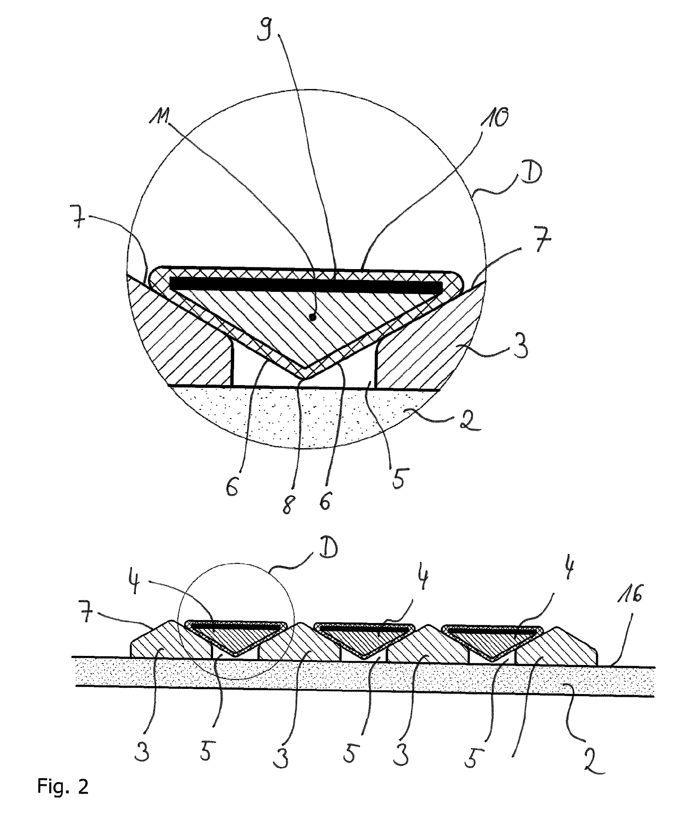

In Fig. 2 wird der radial bewehrte Kunststoffschlauch 1 mit den beiden radialen Bewehrungen 3 und 4 vergrößert dargestellt. Die erste radiale Bewehrung 3 ist um den Innenschlauch 2 gewickelt angeordnet. Die erste radiale Bewehrung kann mit dem Innenschlauch 2 verklebt und/oder verschweißt und/oder mit Hilfe eines Extrusionsverfahrens einstückig ausgebildet sein. Vorzugsweise besteht die erste radiale Bewehrung 3 aus einem Hartkunststoffmaterial, um eine hohe radiale Steifigkeit und somit Knickfestigkeit zu erzielen. Die erste radiale Bewehrung 3 bildet mit dem verbundenen Innenschlauch 2 einen durchgehenden Windungsfreiraum 5. In diesem Windungsfreiraum 5 ist die zweite radiale Bewehrung 4 beweglich und zwar relativ zu der ersten radialen Bewehrung 3 gelagert. Der Detailausschnitt D zeigt die Anordnung der zweiten radialen Bewehrung 4 in einem von zwei ersten radialen Bewehrungsringen 3 gebildeten Windungsfreiraum 5. Es sei darauf hingewiesen, dass die erste radiale Bewehrung 3 nicht aus einzelnen Ringen besteht, diese lediglich im Querschnitt als solche dargestellt werden. Die verbunden Bewehrungsringe können auch als Bewehrungsabschnitte gebogener Form bezeichnet werden.

Gemäß Darstellung D weist die zweite radiale Bewehrung 4 im Querschnitt ein dreieckförmiges Profil auf. Die beiden Flächen 6 des gleichschenkligen Dreiecks liegen dabei auf Flächen 7 der ersten radialen Bewehrung 3 auf. Auch die erste radiale Bewehrung 3 umfasst eine Dreiecksform, wobei die Grundfläche des Dreiecks auf einem zum Innenschlauch 2 erhöhten Absatz angeordnet ist. Im dargestellten Beispiel besteht die zweite radiale Bewehrung 4 aus einem Grundkörper 11, welcher aus Polyamid oder Polyethylen, insbesondere Polyethylen hoher Dichte, und/oder Polyester und/oder Polypropylen und/oder Polyurethan und/oder Hart-PVC hergestellt ist. Auf dem Grundkörper 11 ist eine Dekorschicht 9 angeordnet. Bei der Dekorschicht 9 kann es sich um eine metallisierte Folie oder Heißprägefolie handeln. Zur Erzielung einer hohen Abriebfestigkeit ist die Dekorschicht 9 mit einer Ummantelung 10 versehen. Bei der Ummantelung 10 kann es sich um ein gleitfähiges, abriebfestes Material wie z.B. Polyamid handeln.

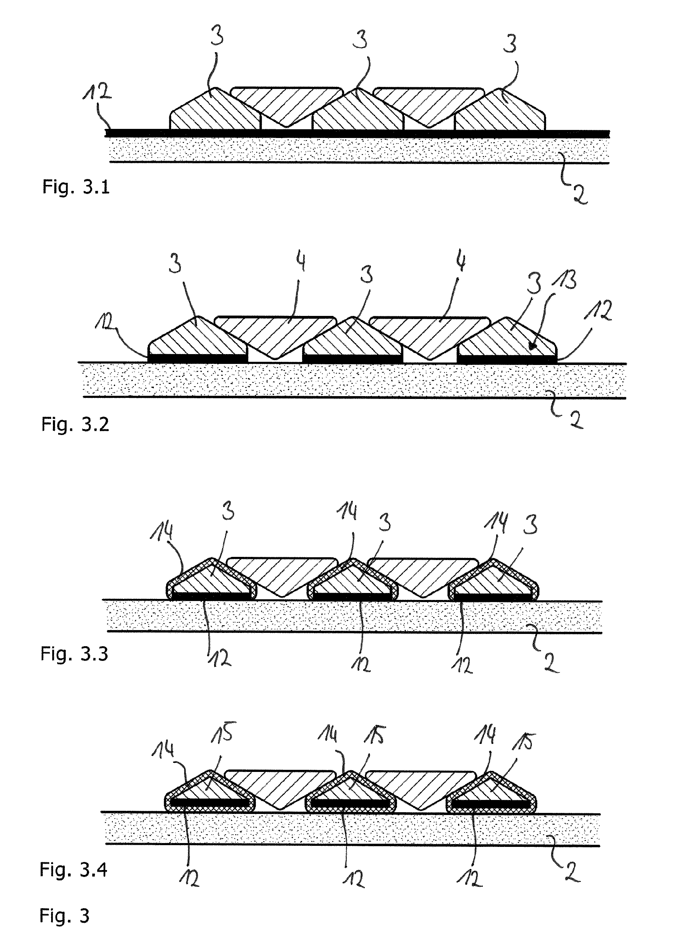

In Fig. 3 bzw. den Ausführungsbeispielen Fig. 3.1 bis 3.4 sind verschiedene Ausführungsmöglichkeiten bezüglich der Anordnung einer adsorbierenden, insbesondere durch Strahlung aktivierbaren, Schicht 12, dargestellt.

Im ersten Beispiel gemäß Fig. 3.1 ist die adsorbierende Schicht 12 auf dem Innenschlauch 2 aufgetragen. In diesem Zusammenhang sei erwähnt, dass die adsorbierende Schicht 12 pulverförmig und/oder in Form einer Folie und/oder in Lackform und/oder in Form einer Heißsiegelfolie und/oder in Form eines Extrudats und/oder in Form eines Ko-Extrudats aufgebracht sein kann. Die Aufbringung der adsorbierenden Schicht 12 auf den Innenschlauch 2 kann durch Coextrusion und/oder nachfolgender Ummantelung erfolgen. Die erste radiale Bewehrung 3 wird demnach nach dem Aufbringen der adsorbierenden Schicht 12 auf den Innenschlauch 2 aufgebracht. Anschließend erfolgt die Aktivierung der adsorbierenden Schicht, so dass die erste radiale Bewehrung 3 mit dem Innenschlauch 2 stoffschlüssig verbunden wird. Die Aktivierung erfolgt beispielsweise durch einen Laser und/oder eine Infrarotlampe und/oder eine Mikrowellenvorrichtung. Die verschiedenen Möglichkeiten bezüglich der Aktivierung der adsorbierenden Schicht sowie die möglichen Formen der adsorbierenden Schicht können bezüglich der Ausführungsformen gemäß Fig. 3.1 bis 3.4 wahlweise kombiniert werden.

Gemäß der in Fig. 3.2 dargestellten Ausführungsform, ist die adsorbierende Schicht 12 lediglich im Bereich der Grundfläche 13 der ersten radialen Bewehrung 3 angeordnet. Im Gegensatz zum Ausführungsbeispiel gemäß Fig. 3.1 ist die adsorbierende Schicht 12 demnach nicht vollflächig auf den Innenschlauch 2 aufgebracht, sondern befindet sich lediglich an den Kontaktstellen zur ersten radialen Bewehrung 3. Demnach kann die adsorbierende Schicht 12 auf der Grundfläche 13 der ersten radialen Bewehrung 3 aufgebracht sein. Außerdem ist es möglich, die adsorbierende Schicht 12 in einem ersten Schritt abschnittsweise auf den Innenschlauch 2 aufzubringen und in einem weiteren Schritt die erste radiale Bewehrung 3 auf die mit einer abzubildenden Schicht 12 versehenen Abschnitte aufzubringen. In diesem Zusammenhang ist ebenfalls denkbar, die adsorbierende Schicht mit Hilfe eines Coextrusionsverfahrens in Zusammenhang mit der Herstellung der ersten radialen Bewehrung aufzubringen.

Die Dreiecksspitze 8 der zweiten radialen Bewehrung 4 stößt gemäß dieser Ansicht nicht am Innenschlauch 2 an bzw. gelangt in diesem Zusammenhang nicht mit dem Innenschlauch 2 in Kontakt. Der dargestellte Zustand entspricht einem ungebogenen und mit keinem Druck beaufschlagten Zustand. Unter Biegung und bei einer Druckbeaufschlagung berührt die Dreieckspitze 8 die Außenfläche 16 des Innenschlauchs 2.

Gemäß der in Fig. 3.3 dargestellten Ausführungsform, liegen eine coextrudierte radiale Bewehrung 3 mit einer adsorbierenden Schicht 12 sowie einer Ummantelung 14 vor. Eine Beschichtung der ersten radialen Bewehrung 3 hat gegenüber einer Beschichtung der Innenseele bzw. des Innenschlauches 2 den Vorteil, dass nur der zu erhitzende Bereich adsorbierend ausgeführt ist und somit die höchste Energieausbeute erzielt wird. Bei der Beschichtung der ersten radialen Bewehrung 3 hat sich eine Koextrusion mit der ersten radialen Bewehrung oder eine Ummantelung 14 der ersten radialen Bewehrung 3 als besonders geeignet erwiesen. Die Koextrusion ist kostengünstig und prozesssicher und erlaubt die Verarbeitung einer großen Bandbreite an Thermoplasten.

In Fig. 3.4 befindet sich die adsorbierende Schicht 12 wiederum auf der Grundfläche 13 der ersten radialen Bewehrung 3, wobei die erste radiale Bewehrung 3 vollumfänglich mit einer Ummantelung 14 versehen ist. Die adsorbierende Schicht 12 befindet sich zwischen der Ummantelung 14 und dem Grundkörper 15 der ersten radialen Bewehrung 3. Demnach befindet sich zwischen der Außenfläche 16 des Innenschlauchs 2 und der adsorbierenden Schicht 12 die Ummantelung 14 der ersten radialen Bewehrung 3.

Zusammenfassend ist festzustellen, dass die adsorbierende Schicht entweder auf der Außenfläche 16 des Innenschlauchs 2 und/oder auf der ersten radialen Bewehrung 3 aufgebracht ist.

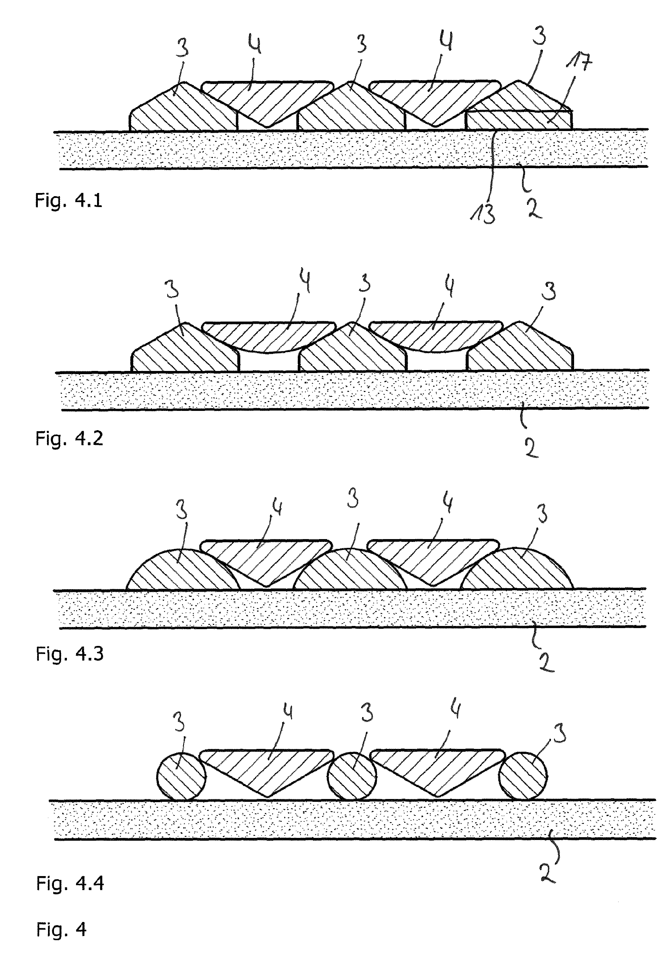

In Fig. 4 werden vier verschiedene Ausführungsformen bezüglich der Profilformen der beiden radialen Bewehrungen 3 und 4 dargestellt.

Gemäß einer ersten Ausführungsform, welche in Fig. 4.1 dargestellt ist, weist die zweite radiale Bewehrung 4 im Querschnitt eine Dreiecksform auf. Auch die erste radiale Bewehrung 3 umfasst im Querschnitt eine Dreiecksform, wobei die Grundfläche 14 der ersten radialen Bewehrung mit der Dreiecksform über einen Absatz 17 verbunden ist.

Gemäß Ausführungsform Fig. 4.2 entspricht die Querschnittsform der ersten radialen Bewehrung der bereits in Fig. 4.1 beschriebenen Querschnittsform. Die zweite radiale Bewehrung 4 weist einen kreissegmentförmigen Querschnitt auf. Dieser kann auch als halbschalenförmiger Querschnitt bezeichnet werden.

In Fig. 4.3 weist die erste radiale Bewehrung 3 einen halbkreisförmigen Querschnitt auf. Diese Querschnittsform der ersten radialen Bewehrung 3 wird mit einer dreiecksförmigen Querschnittsform bezüglich der zweiten radialen Bewehrung kombiniert.

Gemäß Fig. 4 ist es des Weiteren möglich, die Bewehrung mit einem im Querschnitt kreisförmigen Profil zu versehen. Dieses kreisförmige Profil kann mit einem dreiecksförmigen, insbesondere einem gleichschenkligen dreiecksförmigen Profil der zweiten radialen Bewehrung kombiniert werden.

Die einzelnen beschriebenen Ausführungsbeispiele lassen sich in verschiedenen Weisen erfindungsgemäß kombinieren.

### Bezugszeichenliste

- 1: Radial bewehrter Kunststoffschlauch
- 2: Innenschlauch
- 3: Erste radiale Bewehrung
- 4: Zweite radiale Bewehrung
- 5: Windungsfreiraum
- 6: Fläche der zweiten radialen Bewehrung
- 7: Fläche der ersten radialen Bewehrung
- 8: Dreiecksspitze
- 9: Dekorschicht
- 10: Ummantelung
- 11: Grundkörper
- 12: Adsorbierende Schicht
- 13: Grundfläche der ersten radialen Bewehrung
- 14: Ummantelung der ersten radialen Bewehrung
- 15: Grundkörper
- 16: Außenfläche
- 17: Absatz

## Patentansprüche

1. Radial bewehrter Kunststoffschlauch (1), umfassend einen Innenschlauch (2), eine erste radiale Bewehrung (3) und eine zweite radiale Bewehrung (4), wobei die erste radiale Bewehrung (3) mit dem Innenschlauch (2) fest verbunden ist und einen Windungsfreiraum (5) bildet, wobei die zweite radiale Bewehrung (4) in dem Windungsfreiraum (5) beweglich gelagert angeordnet ist und eine Schlauchoberfläche bildet.

2. Radial bewehrter Kunststoffschlauch (1) nach Anspruch 1,
**dadurch gekennzeichnet, dass**
die zweite radiale Bewehrung (4) als Gleitelement ausgebildet, insbesondere aus einem gleitfähigen und/oder abriebfestem Material hergestellt, ist.

3. Radial bewehrter Kunststoffschlauch (1) nach Anspruch 1 oder 2,
**dadurch gekennzeichnet, dass**
die zweite radiale Bewehrung (4) und/oder die Oberfläche der zweiten radialen Bewehrung (4) aus Polyamid und/oder Polyethylen, insbesondere Polyethylen hoher Dichte, und/oder Polyester und/oder Polypropylen und/oder Polyurethan und/oder Hart-PVC, hergestellt ist.

4. Radial bewehrter Kunststoffschlauch (1) nach einem der Ansprüche 1 bis 3,
**dadurch gekennzeichnet, dass**
der Innenschlauch (2) ein Glattschlauch ist.

5. Radial bewehrter Kunststoffschlauch (1) nach einem der vorangegangenen Ansprüche,
**dadurch gekennzeichnet, dass**
der Innenschlauch (2) eine Längsarmierung zur Aufnahme von Zugkräften und/oder ein Kreuzgeflecht zur Aufnahme von Zug- und Druckkräften aufweist.

6. Radial bewehrter Kunststoffschlauch (1) nach einem der vorangegangenen Ansprüche,
**dadurch gekennzeichnet, dass**
die zweite radiale Bewehrung (4) eine Dekorschicht (9) aufweist.

7. Radial bewehrter Kunststoffschlauch nach Anspruch 6,
**dadurch gekennzeichnet, dass**
die Dekorschicht (9) abschnittsweise auf der vom Innenschlauch (2) wegweisenden Fläche der zweiten radialen Bewehrung (4) angeordnet ist.

8. Radial bewehrter Kunststoffschlauch nach Anspruch 6 oder 7,
**dadurch gekennzeichnet, dass**
auf der Dekorschicht (9) abschnittsweise ein gleitfähiges und/oder abriebfestes Material (10), insbesondere Polyamid, aufgebracht ist.

9. Verfahren zur Herstellung eines radial bewehrten Kunststoffschlauchs (1), insbesondere eines radial bewehrten Kunststoffschlauchs (1) nach einem der Ansprüche 1 bis 8, umfassend die Schritte:
a) Herstellung eines Innenschlauchs (2),
b) abschnittsweises Aufbringen einer adsorbierenden, insbesondere durch Strahlung aktivierbare, Schicht (12) auf der Außenfläche (16) des Innenschlauchs (2) und/oder auf einer ersten aufzubringenden radialen Bewehrung (3),
c) Aktivierung der adsorbierenden Schicht (12),
d) stoffschlüssige Verbindung der radialen Bewehrung (3) mit dem Innenschlauch (2).

10. Verfahren nach Anspruch 9,
**dadurch gekennzeichnet, dass**
die Aktivierung der Schicht (12) durch einen Laser und/oder eine Infrarotlampe und/oder eine Mikrowellenvorrichtung erfolgt.

11. Verfahren nach Anspruch 9 oder 10,
**dadurch gekennzeichnet, dass**
die adsorbierende Schicht (12) pulverförmig und/oder in Form einer Heißsiegelfolie und/oder in Form eines Lackes und/oder in Form einer Folie und/oder in Form eines Extrudats und/oder in Form eines Coextrudats aufgebracht wird.

12. Verfahren nach einem der Ansprüche 9 bis 11,
**dadurch gekennzeichnet, dass**
aufgrund der Verbindung der ersten radialen Bewehrung (3) mit dem Innenschlauch (2) eine Windungsfreiraum (5) gebildet wird, wobei eine zweite radiale Bewehrung (4) in dem Windungsfreiraum (5) beweglich gelagert angeordnet wird.

13. Verfahren nach Anspruch 12,
**dadurch gekennzeichnet, dass**
die zweite radiale Bewehrung (4) in dem Windungsfreiraum (5) gewickelt wird.
